# EUROPÄISCHE PATENTANMELDUNG

(11) **EP 1 688 607 A2**
(43) Veröffentlichungstag der Anmeldung: **09.08.2006**
(21) Anmeldenummer: 05112501.1
(22) Anmeldetag: 20.12.2005
(51) Int. Cl.: F02M 25/07

(54) **Abgasrückführungssystem für eine Brennkraftmaschine sowie Abgasrückführungssystem**

(30) Priorität: 19.01.2005 DE 102005002518
(71) Anmelder: Pierburg GmbH, 41460 Neuss (DE)
(72) Erfinder: Köster, Andreas, 45149, Essen (DE); Dismon, Heinrich, 53538, Gangelt (DE)
(74) Vertreter: von Kirschbaum, Alexander

(57) **Zusammenfassung**

Ein erfindungsgemäßes Abgasrückführungssystem für eine Brennkraftmaschine (10) weist eine von einem Einlass (14) zu einem Verdichter (18) führende Niederdruck-Zuführleitung (12) auf. Von dem Verdichter (18) führt zu der Brennkraftmaschine (10) eine Hochdruck-Zuführleitung (20). Von der Brennkraftmaschine (10) führt zu einer Turbine (24) eine Hochdruck-Abgasleitung (22). Von der Turbine (24) führt zu einem Auslass (30) eine Niederdruck-Abgasleitung (26). Mit der Niederdruck-Abgasleitung (26) und der Niederdruck-Zufuhrleitung (12) ist ein Niederdruck-Rückführstrang (32) zum Rückführen von Abgas verbunden. Mit der Hochdruck-Abgasleitung (22) ist eine Bypassleitung (34) verbunden, um die Wärme des in der Brennkraftmaschine (10) entstehenden Abgases zur Erwärmung des rückzuführenden Abgases des Niederdruck-Rückführstrangs (32) zu nutzen, bevor das Abgas ggf. der Turbine (24) zugeführt wird. Dadurch kann die Kaltstartphase der Brennkraftmaschine (10) verkürzt werden.

## Beschreibung

Die Erfindung betrifft ein Abgasrückführungssystem für eine Brennkraftmaschine, insbesondere einen Dieselmotor, mit dem in der Brennkraftmaschine entstehendes Abgas einer der Brennkraftmaschine zuzuführenden Frischluft rückgeführt werden kann. Die Erfindung betrifft ferner ein Abgasrückführungsverfahren, bei dem das Abgas in der Brennkraftmaschine der Frischluft für die Brennkraftmaschine rückgeführt werden kann.

Bekannte Abgasrückführungssysteme weisen ein Rohrleitungssystem auf, das von einem Auslass einer Brennkraftmaschine zu einem Einlass führt. Hierzu weist das Abgasrückführungssystem eine von einem Einlass zu einem Verdichter führende Niederdruck-Zuführleitung auf. Von dem Verdichter zu der Brennkraftmaschine führt eine Hochdruck-Zuführleitung, um die in dem Einlass eingesaugte Frischluft der Brennkraftmaschine, insbesondere einem Verbrennungsmotor, zuzuführen. Nach der Verbrennung in der Brennkraftmaschine wird das in der Brennkraftmaschine entstehende Abgas über eine Hochdruck-Abgasleitung von der Brennkraftmaschine zu einer Turbine abgeleitet. Von der Turbine gelangt das Abgas über eine Niederdruck-Abgasleitung zu einem Auslass. Um den Schadstoffausstoß des Abgases zu reduzieren und die Verbrennung in der Brennkraftmaschine zu verbessern, ist ein mit der Niederdruck-Abgasleitung und der Niederdruck-Zuführleitung verbundener Niederdruck-Rückführstrang vorgesehen, der ein Teil des Abgases der Niederdruck-Zuführleitung zuführt, wodurch ein Teil des Abgases rückgeführt wird.

Nachteilig bei einem derartigen Abgasrückführungssystem ist, dass insbesondere in der Kaltstartphase der Brennkraftmaschine die Temperatur der der Brennkraftmaschine zuzuführenden Frischluft nicht optimal eingestellt ist und erst nach einiger Zeit die für eine gute Verbrennung erforderliche Temperatur erreicht wird. Dies führt in der Brennkraftmaschine zu einer ungünstigen Verbrennung, so dass insbesondere bei einem Dieselmotor das Abgas hohe Anteile an Russpartikeln und mitgerissenem Öl aufweist.

Um die Kaltstartphase zu verkürzen ist es bekannt, das heiße, von der Brennkraftmaschine kommende Abgas in einem Hochdruck-Rückführstrang in die Hochdruck-Zuführleitung rückzuführen. Dies führt jedoch dazu, dass die im Abgas enthaltenen Russpartikel und das mitgerissene Öl der Brennkraftmaschine wieder zugeführt wird, so dass sich unerwünschte Verschmutzungen in der Brennkraftmaschine aufkonzentrieren, wodurch die Verbrennung in der Brennkraftmaschine verschlechtert wird. Ferner führt dies zu einem erhöhten Verschleiß der Brennkraftmaschine, insbesondere im Bereich der Einlassventile, sowie zur Versottung von Drallklappen. Insbesondere sind die Russpartikel für die Zylinderlaufbahnen der Brennkraftmaschine kritisch.

Aufgabe der Erfindung ist es, ein Abgasrückführungssystem sowie ein Abgasrückführungsverfahren mit verbessertem Kaltstartverhalten zu schaffen.

Die Lösung der Aufgabe erfolgt erfindungsgemäß durch ein Abgasrückführungssystem mit den Merkmalen des Anspruchs 5 sowie einem Abgasrückführungsverfahren mit den Merkmalen des Anspruchs 7.

Das erfindungsgemäße Abgasrückführungssystem für eine Brennkraftmaschine, bei der es sich insbesondere um einen Dieselmotor handelt, weist eine Niederdruck-Zuführleitung auf, die von einem Einlass zu einem Verdichter führt. Von dem Verdichter führt eine Hochdruck-Zuführleitung zu der Brennkraftmaschine. Von der Brennkraftmaschine führt eine Hochdruck-Abgasleitung zu einer Turbine, so dass das in der Brennkraftmaschine entstehende Abgas der Turbine zugeführt werden kann. Von der Turbine führt eine Niederdruck-Abgasleitung zu einem Auslass. Mit der Niederdruck-Abgasleitung und der Niederdruck-Zuführleitung ist ein Niederdruck-Rückführstrang zum Rückführen von Abgas verbunden. Erfindungsgemäß ist mit der Hochdruck-Abgasleitung eine Bypassleitung verbunden, um die Wärme des in der Brennkraftmaschine entstehenden Abgases zur Erwärmung des rückzuführenden Abgases des Niederdruck-Rückführstrangs zu nutzen.

In einer ersten unabhängigen Erfindung weist die Bypassleitung einen Wärmetauscher auf, um zumindest einen Teil des rückzuführenden Abgases des Niederdruck-Rückführstrangs zu erwärmen. Von dem Wärmetauscher führt die Bypassleitung zurück zu der Hochdruck-Abgasleitung und/ oder an der Turbine vorbei zu der Niederdruck-Abgasleitung.

In einer zweiten unabhängigen Erfindung, die in bevorzugter Ausführungsform zusammen mit der ersten Erfindung verwirklicht ist, führt die Bypassleitung insbesondere direkt von der Hochdruck-Abgasleitung zu der Niederdruck-Abgasleitung, d. h. an der Turbine vorbei. Zur Erwärmung des rückzuführenden Abgases ist ein Wärmetauscher somit nicht erforderlich, da die Wärme des heißen, von der Brennkraftmaschine kommenden Abgases direkt für das rückzuführende Abgas genutzt werden kann. Die Turbine wird also umgangen und kann dem Abgas keine Wärme entziehen.

Mit Hilfe der Bypassleitung ist es möglich, durch die Abgasrückführung die Wärme des heißen Abgases zur Erwärmung des rückzuführenden Abgases und/ oder zur Erwärmung der zuzuführenden Frischluft zu nutzen, ohne hierfür die im Abgas enthaltenen Verschmutzungen der Brennkraftmaschine erneut zuzuführen. Ferner wird ein ggf. erforderlicher Hochdruck-Rückführstrang eingespart. Ferner wird erreicht, dass die Wärme des Abgases bevorzugt für die Erwärmung des rückzuführenden Abgases verwendet wird und erst nachrangig die Turbine, die insbesondere zusammen mit dem Verdichter einen Turbolader ausbildet, erwärmt wird. Eine durch die Wärmekapazität des Turboladers entstehende Verzögerung für die Erwärmung des rückzuführenden Abgases ist somit vermieden. Ferner werden schneller höhere Temperaturen in der Niederdruck-Abgasleitung erreicht, so dass ein ggf. vorhandener Katalysator zur Abgasbehandlung schneller im optimalen Bereich arbeitet. Insbesondere wenn ein Teil des Abgases an der Turbine vorbeigeführt wird, wird noch vor der Erwärmung des Turboladers zunächst eine in der Niederdruck-Abgasleitung ggf. vorgesehene Abgasbehandlungseinrichtung, bei der es sich beispielsweise um einen Katalysator handelt, erwärmt, wodurch der Ausstoß schädlicher Abgase und Schadstoffe, wie z. B. NOₓ, CO, SO₂ reduziert wird. Da durch die schnelle Erwärmung der Frischluft besonders schnell eine möglichst vollständige Verbrennung in der Brennkraftmaschine erreicht wird, wird der Ausstoß schädlicher Abgase und Schadstoffe zusätzlich reduziert.

In bevorzugter Ausführungsform weist die Bypassleitung und/ oder die Hochdruck-Abgasleitung ein Bypassventil auf, mit dem der Volumenstrom für die Bypassleitung eingestellt werden kann. Dadurch ist es insbesondere möglich, beispielsweise in der Kaltstartphase und/ oder der Leerlaufphase des Verbrennungsmotors einen besonders hohen Volumenstrom durch die Bypassleitung zu leiten und bei einer allmählich steigenden Temperatur der Frischluft den Volumenstrom entsprechend zu verringern. Dadurch ist es möglich, in der Warmlaufphase oder wenn plötzlich eine besonders hohe Leistung des Verbrennungsmotors benötigt wird, die Bypassleitung zu verschließen, um möglichst viel Energie des von der Brennkraftmaschine kommenden Abgases im Verdichter zu nutzen.

Vorzugsweise weist die Bypassleitung ein Turbinenbypassventil auf, mit dem eingestellt werden kann, welcher Volumenstrom an der Turbine vorbei der Niederdruck-Abgasleitung zugeführt werden kann. Entsprechend wird durch das Turbinenbypassventil eingestellt, welcher Volumenstrom über die Bypassleitung der Turbine zugeführt wird.

Vorzugsweise weist die Niederdruck-Abgasleitung und/ oder der Niederdruck-Rückführstrang ein Abgasrückführungsventil auf. Das Abgasrückführungsventil dient zur Einstellung des Volumenstroms für den Niederdruck-Rückführstrang. Zusätzlich bzw. alternativ kann der Niederdruck-Rückführstrang ein Wärmetauscherventil aufweisen, mit dem der Volumenstrom für den Wärmetauscher eingestellt werden kann. Hierzu kann der Niederdruck-Rückführstrang einen Bypassstrang aufweisen, über den der Volumenstrom, der nicht dem Wärmetauscher zugeführt werden soll, an dem Wärmetauscher vorbei geleitet wird.

Bei dem erfindungsgemäßen Abgasrückführungsverfahren wird ein in einer Brennkraftmaschine entstehendes Abgas in einen Frischluftstrom für die Brennkraftmaschine zurückgeführt. Hierbei wird zunächst Frischluft für die Brennkraftmaschine angesaugt. Mit Hilfe der angesaugten Frischluft wird in der Brennkraftmaschine eine Verbrennung durchgeführt. Anschließend wird das in der Brennkraftmaschine entstehende Abgas in Richtung eines Energieverbrauchers, bei dem es sich insbesondere um eine Turbine handelt, abgeleitet. Zumindest ein Teil des in der Brennkraftmaschine entstandenen Abgases wird in die angesaugte Frischluft zurückgeführt. Erfindungsgemäß wird zumindest ein Teil des von der Brennkraftmaschine kommenden Abgases als Heizgas zur Erwärmung des rückzuführenden Abgases genutzt. Ggf. wird das genutzte Heizgas ganz oder teilweise dem Energieverbraucher zugeführt.

Das erfindungsgemäße Abgasrückführverfahren ist, insbesondere wie an Hand der erfindungsgemäßen Abgasrückführungssysteme erläutert, weiter fortgebildet.

Vorzugsweise wird das Heizgas unmittelbar vor und/ oder unmittelbar nach dem Energieverbraucher dem Abgas zugeführt. Die Menge des Heizgases und/ oder die Menge des rückgeführten Abgases wird vorzugsweise in Abhängigkeit von der Temperatur, insbesondere der Temperatur, der der Brennkraftmaschine zugeführten Frischluft, eingestellt.

Vorzugsweise wird nach Erreichen einer vorbestimmten Temperatur der Frischluft und / oder des rückgeführten Abgases das von der Brennkraftmaschine kommende Abgas vollständig dem Energieverbraucher zugeführt, d. h. eine Nutzung des Abgases als Heizgas zur Erwärmung des rückzuführenden Abgases erfolgt nicht. Es wird also automatisch erkannt, ob beispielsweise für die Kaltstartphase der Brennkraftmaschine eine Nutzung des von der Brennkraftmaschine kommenden Abgases als Heizgas überhaupt notwendig ist. Da nach Erreichen der vorbestimmten Temperatur eine Nutzung des Abgases als Heizgas nicht mehr erforderlich ist, wird das Abgas vollständig in dem Energieverbraucher genutzt.

Nachfolgend wird die Erfindung an Hand einer bevorzugten Ausführungsform unter Bezugnahme auf die anliegende Zeichnung näher erläutert.

Es zeigt:

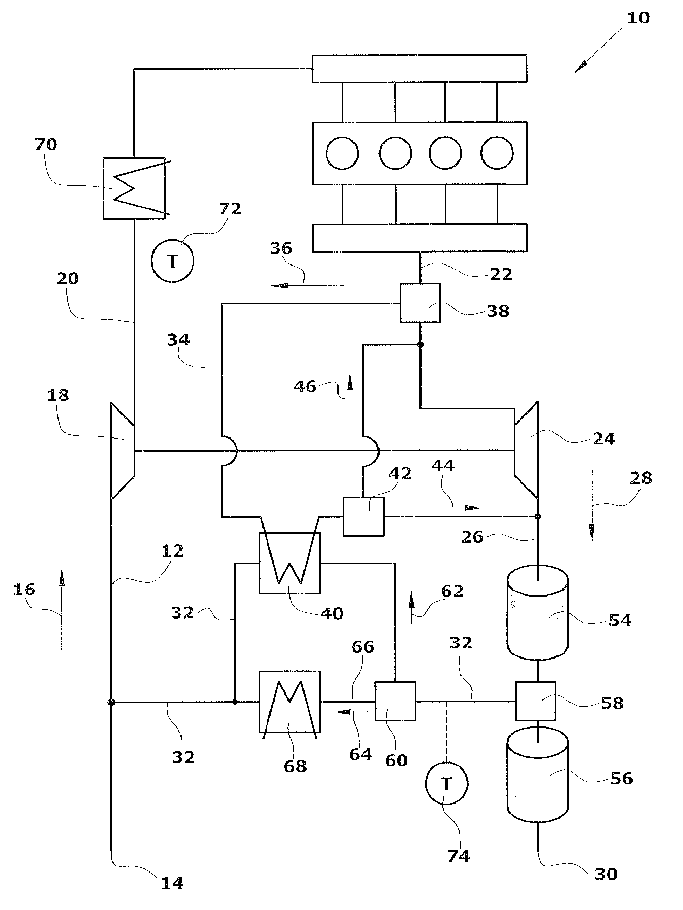

- Fig. 1: eine schematische Darstellung eines erfindungsgemäßen Abgasrückführungssystems.

Das erfindungsgemäße Abgasrückführungssystem für eine Brennkraftmaschine 10 weist eine Niederdruck-Zuführleitung 12 auf, die Frischluft von einem Einlass 14 in Richtung eines Pfeils 16 zu einem Verdichter 18 leitet. Von dem Verdichter 18 führt eine Hochdruck-Zuführleitung 20 zu der Brennkraftmaschine 10. Von der Brennkraftmaschine 10 führt eine Hochdruck-Abgasleitung 22 zu einer Turbine 24. Von der Turbine 24 führt eine Niederdruck-Abgasleitung 26 in Richtung eines Pfeils 28 zu einem Auslass 30. Mit der Niederdruck-Abgasleitung 26 und der Niederdruck-Zuführieitung 12 ist ein Niederdruck-Rückführstrang 32 verbunden.

Mit der Hochdruck-Abgasleitung 22 ist eine Bypassleitung 34 verbunden, die zumindest einen Teil des in der Brennkraftmaschine 10 entstandenen Abgases in Richtung eines Pfeils 36 ableitet. Der in Richtung des Pfeils 36 abgeleitete Volumenstrom kann mit Hilfe eines Bypassventils 38 eingestellt werden. Im dargestellten Ausführungsbeispiel wird das in Richtung des Pfeils 36 abgeleitete Abgas mit Hilfe der Bypassleitung 34 einem Wärmetauscher 40 zugeführt, mit dessen Hilfe das in dem Niederdruck-Rückführstrang 32 enthaltene rückgeführte Abgas erwärmt werden kann.

Die Bypassleitung 34 weist ferner ein Turbinenbypassventil 42 auf, mit dem der Volumenstrom der Bypassleitung 34 aufgespaltet werden kann. Mit Hilfe des Turbinenbypassventils 42 ist es möglich, einen Teil des Heizgases der Bypassleitung 34 in Richtung eines Pfeils 44 an der Turbine 24 vorbei der Niederdruck-Abgasleitung 26 zuzuführen. Ferner kann ein Teil des Heizgases mit Hilfe des Turbinenbypassventils 42 in Richtung eines Pfeils 46 der Turbine 24 zugeführt werden.

Die Niederdruck-Abgasleitung 26 weist ferner ein Filterelement 54 auf, bei dem es sich beispielsweise um einen Dieselpartikelfilter handelt. Ferner ist in der Niederdruck-Abgasleitung 26 eine Abgasbehandlungseinrichtung 56 vorgesehen, bei der es sich insbesondere um einen Katalysator handelt.

Der Volumenstrom des über den Niederdruck-Rückführstrang 32 zurückgeführten Abgases kann mit Hilfe eines Abgasrückführungsventils 58, das in der Niederdruck-Abgasleitung 26 und/ oder des Niederdruck-Rückführstrangs 32 angeordnet ist, eingestellt werden. Der Volumenstrom des rückgeführten Abgases des Niederdruck-Rückführstrangs 32 kann mit Hilfe eines Wärmetauscherventils 60 in einen Volumenstrom aufgeteilt werden, der in Richtung eines Pfeils 62 dem Wärmetauscher 40 zugeführt wird und/ oder in einem Volumenstrom, der in Richtung eines Pfeils 64 über einen Bypassstrang 66 an dem Wärmetauscher 40 vorbei geleitet wird. Vorzugsweise ist in dem Bypassstrang 66 ein Kühler 68 vorgesehen, falls insbesondere nach der Warmlaufphase das rückgeführte Abgas nicht gewärmt, sondern gekühlt werden soll. Dies kann der Fall sein, um das Überschreiten einer kritischen Grenztemperatur des Verdichters 18 sicher zu verhindern. Ferner kann auch in der Hochdruck-Zuführleitung 20 zu einem vergleichbaren Zweck ein Ladeluftkühler 70 angeordnet sein.

Bei den vorgenannten Ventilen 38, 42, 58, 60 kann es sich um einfache An-/ Aus-Ventile handeln. Vorzugsweise handelt es sich hierbei jedoch um 3/2 Wege-Ventile und/ oder stufenlos regelbare Ventile. Dadurch ist es insbesondere möglich, die Ventile 38, 42, 58, 60 in Abhängigkeit der Temperatur des Gases in der Hochdruck-Zuführleitung 20 zu regeln. Die Temperatur des Gases in der Hochdruck-Zuführleitung 20 kann mit Hilfe eines Temperaturmessfühlers 72 gemessen werden. Zusätzlich bzw. alternativ kann auch die Temperatur des rückgeführten Gases des Niederdruck-Rückführstrangs 32 mit Hilfe eines zweiten Temperaturmessfühlers 74 gemessen werden. Die Temperatur des rückgeführten Gases kann auch indirekt mit Hilfe einer λ-Sonde des Katalysators 56 gemessen werden. Mit Hilfe der von den Temperaturmessfühlern 72, 74 bzw. der λ-Sonde des Katalysators 56 gemessenen Temperaturen können die Ventile 38, 42, 58, 60 individuell gesteuert und für den jeweiligen Betriebszustand der Brennkraftmaschine 10 optimal eingestellt werden.

## Patentansprüche

1. Abgasrückführungssystem für eine Brennkraftmaschine (10), insbesondere einen Dieselmotor, mit
einer von einem Einlass (14) zu einem Verdichter (18) führenden Niederdruck-Zuführleitung (12),
einer von dem Verdichter (18) zu der Brennkraftmaschine (10) führenden Hochdruck-Zuführleitung (20),
einer von der Brennkraftmaschine (10) zu einer Turbine (24) führenden Hochdruck-Abgasleitung (22),
einer von der Turbine (24) zu einem Auslass (30) führenden Niederdruck-Abgasleitung (26) und
einem mit der Niederdruck-Abgasleitung (26) und der Niederdruck-Zuführleitung (12) verbundenen Niederdruck-Rückführstrang (32) zum Rückführen von Abgas,
**gekennzeichnet durch**
eine von der Hochdruck-Abgasleitung (22) zu der Niederdruck-Abgasleitung (26) und/ oder der Hochdruck-Abgasleitung (22) führenden Bypassleitung (34), die zur Erwärmung zumindest eines Teils des rückzuführenden Abgases des Niederdruck-Rückführstrangs (32) einen Wärmetauscher (40) aufweist.

2. Abgasrückführungssystem nach Anspruch 1, **dadurch gekennzeichnet, dass** die Bypassleitung (34) und/ oder die Hochdruck-Abgasleitung (22) ein Bypassventil (38) zur Einstellung des Volumenstroms für die Bypassleitung (34) aufweist.

3. Abgasrückführungssystem nach Anspruch 1 oder 2, **dadurch gekennzeichnet, dass** die Niederdruck-Abgasleitung (26) und/ oder der Niederdruck-Rückführstrang (32) ein Abgasrückführungsventil (58) zur Einstellung des Volumenstroms für den Niederdruck-Rückführstrang (32) aufweist.

4. Abgasrückführungssystem nach einem der Ansprüche 1 - 3, **dadurch gekennzeichnet, dass** der Niederdruck-Rückführstrang (32) ein Wärmetauscherventil (60) zur Einstellung des Volumenstroms für den Wärmetauscher (40) aufweist.

5. Abgasrückführungssystem nach einem der Ansprüche 1 - 4, **dadurch gekennzeichnet, dass** die Bypassleitung (34) ein Turbinen-Bypassventil (42) zur Einstellung des Volumenstroms für die Niederdruck-Abgasleitung (26) aufweist.

6. Abgasrückführungssystem nach einem der Ansprüche 2 - 5, **dadurch gekennzeichnet, dass** mindestens eins der Ventile (38, 42, 48, 58, 60) in Abhängigkeit von der Temperatur des Gases in der Hochdruck-Zuführleitung (20), insbesondere stufenlos geregelt ist.

7. Abgasrückführungsverfahren zur Rückführung von in einer Brennkraftmaschine (10), insbesondere einem Dieselmotor, entstehendem Abgas in einen Frischluftstrom für die Brennkraftmaschine (10), mit den Schritten:
Ansaugen der Frischluft für die Brennkraftmaschine (10),
Durchführen einer Verbrennung in der Brennkraftmaschine (10) mit Hilfe der Frischluft,
Ableiten von dem in der Brennkraftmaschine (10) entstandenen Abgas in Richtung eines Energieverbrauchers, insbesondere einer Turbine (24) und
Rückführen zumindest eines Teils des Abgases in die angesaugte Frischluft,
**dadurch gekennzeichnet, dass**
zumindest ein Teil des von der Brennkraftmaschine (10) kommenden Abgases als Heizgas zur Erwärmung des rückzuführenden Abgases genutzt wird.

8. Abgasrückführungsverfahren nach Anspruch 7, **dadurch gekennzeichnet, dass** das Heizgas unmittelbar vor und/ oder unmittelbar nach dem Energieverbraucher (24) dem Abgas zugeführt wird.

9. Abgasrückführungsverfahren nach Anspruch 7 oder 8 **dadurch gekennzeichnet, dass** die Menge des Heizgases und/ oder rückgeführten Abgases in Abhängigkeit von der Temperatur, insbesondere der der Brennkraftmaschine (10) zugeführten Frischluft, eingestellt wird.

10. Abgasrückführungsverfahren nach einem der Ansprüche 7 - 9, **dadurch gekennzeichnet, dass** nach Erreichen einer vorbestimmten Temperatur der Frischluft und/ oder des rückgeführten Abgases das von der Brennkraftmaschine (10) kommende Abgas vollständig dem Energieverbraucher (24) zugeführt wird.
